(19) Europäisches Patentamt

European Patent Office

Office européen des brevets

(11) **EP 1 086 998 A2**

(12) **EUROPEAN PATENT APPLICATION**

(43) Date of publication:
28.03.2001 Bulletin 2001/13

(51) Int. Cl.$^7$: **C09D 11/00**, B41J 2/01

(21) Application number: 00120667.1

(22) Date of filing: 21.09.2000

(84) Designated Contracting States:
**AT BE CH CY DE DK ES FI FR GB GR IE IT LI LU MC NL PT SE**
Designated Extension States:
**AL LT LV MK RO SI**

(30) Priority: 24.09.1999 JP 27040699

(71) Applicant:
**CANON KABUSHIKI KAISHA**
**Tokyo (JP)**

(72) Inventor:
**Shimomura, Masako,**
**c/o Canon Kabushiki Kaisha**
**Tokyo (JP)**

(74) Representative: **Weser, Wolfgang**
**Weser & Kollegen,**
**Patentanwälte,**
**Radeckestrasse 43**
**81245 München (DE)**

(54) **Bubble-jet ink, method of producing ink and ink-jet recording method**

(57) An ink which comprises a liquid medium and a pigment dispersed therein, wherein the pigment contains phosphorus in a concentration of 500 ppm or lower as an inorganic compound, and the liquid medium is water or a mixture of water and a water-soluble organic solvent is provided to prevent kogation on the heater of an ink-jet head. An ink for discharge by the bubble-jet process, an ink production method, an ink-jet recording method, an ink-jet recording unit, ink-jet cartridge, and ink-jet recording apparatus are also provided.

*FIG. 4*

EP 1 086 998 A2

**Description**

BACKGROUND OF THE INVENTION

Field of the Invention

The present invention relates to an ink, a bubble-jet ink, a method of producing the ink, an ink-jet recording method and an ink-jet recording apparatus using the same.

Related Background Art

The ink-jet recording system is a recording method in which ink droplet is formed by various ink discharge systems and all or part of the ink droplet is applied onto a recording medium such as paper to carry out recording. For the ink-jet recording, there have been used inks containing various water-soluble dyes or pigments dissolved or dispersed in water or a liquid medium comprised of water and a water-soluble organic solvent.

The ink-jet recording system includes, for example, a system using mechanical energy and a so-called bubble-jet system using thermal energy for ink discharge.

In the bubble-jet recording system, there is observed a characteristic phenomenon, so-called kogation, deposition of koga to the surface of the heater to apply thermal energy to the ink-jet ink. This kogation may lower the thermal efficiency and discharging efficiency of ink. For preventing kogation, many proposals have been made so far. Japanese Patent Publication No. 5-55555, for example, teaches that the kogation is caused by the contaminating phosphorus compounds in the dye used as a coloring material of the ink, and kogation can be prevented when the phosphorus content in the ink is made 4 ppm by purification of the dye.

Also with ink containing a pigment as a coloring material, kogation is observed when a conventional stationery pigment ink is used for the bubble-jet process. For example, as described in Japanese Patent Application Laid-Open No. 09-183934, such a problem of kogation is solved by regulating ink composition.

SUMMARY OF THE INVENTION

The present inventor has been studying pigment ink to be discharged by the bubble-jet process. The inventor found out that although koga deposits on the surface of a heater even when a pigment ink is used, the deposited koga is one derived from carbon, of which adhesiveness to the heater surface is weak differing from that derived from dye ink. Such koga easily peels off with the cavitation at bubble formation from the heater surface, and substantial influence on ink discharge can be prevented. However, further study has shown that even when a pigment ink is used, sometimes koga firmly adheres onto the surface of the heater, which is a technical problem which must be solved in order to obtain high quality images constantly. The inventor analyzed koga firmly attached on the heater surface to find out that the same phosphorus compounds as those problematic with dye ink exist in it. Studying the origin of these phosphorus compounds, the inventor found out that occurrence of kogation depends on the lot of the pigment in the ink, and the analysis of the inks revealed that ink with which kogation was observed contains a pigment containing phosphorus compounds in a large amount and the pigment in the inks which did not cause kogation hardly contains such phosphorus compounds. Thus, the inventor has clarified that the above unexpected kogation is due to the pigment. This finding that the phosphorus compounds is contained in the pigment was quite unexpected by the inventor since according to the inventor's knowledge phosphorus would not contaminate the pigment during the production process, differing from the dye manufacturing in which a phosphorus compound is used as a catalyst. Further study on this has revealed that sometimes underground water is used to wash the pigment in production process and phosphorus in the underground water is adsorbed by the pigment when the underground water contains a plenty of phosphoric acid or the like.

The present invention was made on the basis of the completely new finding that phosphorus is present in a pigment as inorganic compounds, of which presence has not been known thus far, and this presence is closely related to the problem of kogation in the pigment bubble-jet ink.

An object of the present invention is to provide a pigment ink capable of stably suppressing kogation and a method of producing the pigment ink.

It is another object of the present invention to provide an ink-jet recording method for stable recording of high grade images, an ink-jet recording apparatus, a recording unit and an ink cartridge for that.

According to one aspect of the present invention, there is provided an ink which comprises a liquid medium and a pigment dispersed therein, wherein the pigment contains phosphorus in a concentration of 500 ppm or lower as an inorganic compound, and the liquid medium is water or a mixture of water and a water-soluble organic solvent.

According to another aspect of the present invention, there is provided an ink for discharge by the bubble-jet process, which comprises a pigment containing phosphorus in a concentration of 500 ppm or lower as an inorganic compound, in a state of being dispersed in an aqueous medium, thereby stably reducing the adherence of koga to a heater of a bubble jet head.

According to a further aspect of the present invention, there is provided a method for producing an ink, comprising the steps of:

(i) selecting a pigment containing phosphorus in a concentration of 500 ppm or lower as an inorganic compound; and
(ii) dispersing the pigment selected in step (i) in an aqueous medium.

According to a still further aspect of the present invention, there is provided a method for producing an ink, comprising the steps of:

(i) washing a pigment containing phosphorus in a concentration of 500 ppm or higher as an inorganic compound to lead the concentration to 500 ppm or lower; and
(ii) dispersing the pigment obtained in the step (i) in an aqueous medium.

According to a still futher aspect of the present invention, there is provided an ink-jet recording method which comprises a step of discharging an ink for ink-jet recording from the orifice of a recording head in response to a recording signal, wherein the ink comprises a liquid medium and a pigment dispersed therein, wherein the pigment contains phosphorus in a concentration of 500 ppm or lower as an inorganic compound, and the liquid medium is water or a mixture of water and a water-soluble organic solvent.

According to a still further aspect of the present invention, there is provided an ink-jet recording method which comprises a step of discharging an ink according as described above from an orifice of a recording head in response to a recording signal by an action of thermal energy on the ink.

According to a still further aspect of the present invention, there is provided an ink-jet recording unit comprising an ink container containing an ink for ink-jet recording, and a head section for discharging the ink, wherein the ink comprises a liquid medium and a pigment dispersed therein, wherein the pigment contains phosphorus in a concentration of 500 ppm or lower as an inorganic compound, and the liquid medium is water or a mixture of water and a water-soluble organic solvent.

According to a still further aspect of the present invention, there is provided an ink cartridge comprising an ink containiner containing the ink described above.

According to still further aspect of the present invention, there is provided an ink-jet recording appratus comprising an ink container for containing an ink for ink jet recording and a head for discharging the ink, wherein the ink comprises a liquid medium and a pigment dispersed therein, wherein the pigment contains phosphorus in a concentration of 500 ppm or lower as an inorganic compound, and the liquid medium is water or a mixture of water and a water-soluble organic solvent.

BRIEF DESCRIPTION OF THE DRAWINGS

FIG. 1 is a vertical sectional view of a head of an ink-jet recording apparatus;
FIG. 2 is an external perspective view of a head of an ink-jet recording apparatus;
FIG. 3 is a horizontal sectional view of a head of an ink-jet recording apparatus;
FIG. 4 is a perspective view showing one example of the ink-jet recording apparatus;
FIG. 5 is a vertical sectional view of an ink cartridge;
FIG. 6 is a perspective view of an example of the recording unit; and
FIG. 7 is a schematic illustration showing the configuration of an ink-jet recording head using a piezoelectric element.

DETAILED DESCRIPTION OF THE INVENTION

Next, referring to preferred embodiments, the present invention will be described in further details.

First, the pigment in the ink of the present invention will be described. The pigment to be contained in the ink of the invention should not contain phosphorus at a concentration higher than 500 ppm. By keeping the phosphorus concentration 500 ppm or lower, kogation can be effectively suppressed even after the long time storage, and provide a stable discharge characteristic to obtain a high grade image constantly. To reduce the phosphorus concentration in a pigment to 500 ppm or lower, for example, the pigment may be washed as follows.

As one example of washing treatment of a pigment, pigment is washed with pure water; an acidic aqueous solution such as about 0.1 to 1N hydrochloric acid, sulfuric acid, nitric acid or acetic acid solution; an alkaline aqueous solution containing a hydroxide such as sodium hydroxide, potassium hydroxide or lithium hydroxide at about 0.1 to 1N concentration; and an alkaline aqueous solution such as ammonium.

Furthermore, to shorten the washing time by increasing wettability of the pigment with the washing liquid and to improve the washing efficiency, water-soluble alcohol such as methanol, ethanol and (iso) propanol can be mixed in an order of 5 to 30 % by weight to the total weight of the above washing liquid.

Such washing of pigment may be repeated several times. When an acidic or alkaline solution is used for washing, the pigment must be thoroughly rinsed with pure water thereafter till it becomes neutral. Specifically, for example, the pigment may be packed in a column and washed with a washing liquid; the pigment in a beaker or the like may be washed by repeating decantation; the pigment may be washed by reduced pressure filtration or pressure filtration or by using an aspirator and so on. Reflux extraction, Soxhlet extraction, or a centrifugal separator etc. may be used. Any other washing method will do so long as it is efficient and safe.

Meanwhile, the phosphorus concentration in a pigment can be measured as follows: the pigment is incinerated in an electric furnace or the like, and the ash is dissolved in a strong acid such as concentrated hydrochloric acid, and then the phosphorus content is determined by using an inductively-coupled plasma spectrometer.

Pigments preferably usable in the present invention may be any of commercially available pigments or newly synthesized ones so long as no phosphorus is contained in the structure thereof. However, when light resistance, color hue, safety, thin dispersibility in water on or the like are considered, following dyes can be preferably used: C.I. pigment yellow (hereinafter, "PY") 1, PY 2, PY 4, PY 5, PY 6, PY 7, PY 8, PY 12, PY 13, PY 14, PY 16, PY 17, PY 49, PY 55, PY 68, PY 73, PY 74, PY 75, PY 77, PY 83, PY 93, PY 94, PY 95, PY 97, PY 98, PY 114, PY 117, PY 120, PY 124, PY 127, PY 128, PY 129, PY 151 and PY 154; C.I. Pigment Orange (hereinafter, "PO") 43 and PO 51; C.I. Pigment Red (hereinafter, "PR") 3, PR 4, PR 6, PR 48, PR 52, PR 56, PR 57:1, PR 58, PR 60, PR 63, PR 77, PR 115, PR 122, PR 123, PR 149, PR 168, PR 179, PR 184, PR 189, PR 190, PR 200, PR 202, PR 206, PR 207, PR 209, PR 210 and PR 258; C.I. Pigment Blue (hereinafter, "PB") 15:2, PB 15:3, PB 15:4 and PB 60; and C.I. Pigment Violet (hereinafter, "PV") 19, PV 23 and PV 42, especially preferably, PR 122, PY 74, PY 93, PB 15:2, PB 15:3 and PB 15:4.

Commercially available PR 122 includes Fastogen Super Magenta R (Dainippon Ink), Lionogen Magenta R-F (Toyo Ink Seizo), Hostaperm Pink E (Hoechst), Mondite Rubine 3B (Zeneca), and Quindo Magenta RV-6831 and Quindo Magenta RV-6828 (Mobay Chemical). Commercially available PY 74 includes Yellow 4633N (San-yo Shikiso) and Hanza Brilliant Yellow 5GX (Hoechst). Commercial PY 93 includes Yellow 3G (Chiba Specialty Chemicals). Commercial PB 15:3 includes Chromofine Blue 4920 (Dainichi Seika Kogyo), Cyanine Blue KR-0 (San-yo Shikiso), Cyanine Fast Blue B (Noma Kagaku), Cyanine Blue SSK (Nippon Pigment), Fastogen Blue GBK (Dainippon Ink), Liond Blue FG-7330 (Toyo Ink Seizo), Sumika print Cyanine Blue GN-0 (Sumitomo Chemicals), Heliogen Blue L7101F (BASF), and Heukoff Tar Blue G and XBT-583D (Heubach). They are referred to, but not limited to.

To enhance the density of printed matters and to improve the refill property of the ink, the pigment concentration in the ink is preferably in the range of 3 to 20 wt% of the ink. Besides, the phosphorus concentration in the ink of the invention is preferably 30 ppm or lower. This is the same reason as with the phosphorus concentration of 500 ppm or lower in the pigment.

As a dispersant for dispersing the above pigments, there are resins such as a styrene-acrylate copolymer, styrene-acrylate-alkyl acrylate copolymer, styrene-maleate copolymer, styrene-maleate-alkyl acrylate copolymer, styrene-methacrylate copolymer, styrene-methacrylate-acryl acrylate copolymer, styrene-maleate half ester copolymer and vinyl naphthalene-maleate copolymer and their salts.

Meanwhile, to dissolve such a resin in water or an aqueous organic solvent containing water, it is necessary to neutralize the resin with a neutralizing agent such as an alkaline compound. As preferable examples of neutralizing agents, there are inorganic compounds such as alkali metal hydroxides (e.g., potassium hydroxide, sodium hydroxide and lithium hydroxide), organic amines such as monoethanol amine, diethanol amine, triethanol amine and aminomethylpropanol; and ammonium. The quantity of a neutralizing agent necessary for neutralizing the above resin is obtained by the following equation. In practice, it is better to use the neutralizing agent in an amount 1.0 to 1.2 times as much as the calculated value.

$$\text{Amount of alkali} = \frac{\text{Acidic value of resin} \times \text{Alkali molecular weight} \times \text{Amount of resin}}{56000} \qquad \text{[Equation 1]}$$

The content of the resin used as the pigment dispersant is preferably in the range of 0.05 to 3 wt% of the total weight of the ink, to improve rub resistance of the print, the long-term storage properties of the ink, as well to maintain the good followability of the ink.

In addition to the above dispersant, there are phosphate ester surfactants such as polyoxyethylene tridecyl ether phosphate salt, sodium polyoxyethylene lauryl ether phosphate, sodium polyoxyethylene cetyl ether phosphate and sodium polyoxyethylene oleyl ether phosphate or polyurethane, polyester.

Preferable liquid medium as a component of the ink according to the present invention is a mixture of water and a water-soluble organic solvent. It is prefernable to use ion-exchange water as the water, not common water containing various ions.

As examples of water-soluble organic solvents to be used with water, there are C1 to C4 alkyl alcohols such as methyl alcohol, ethyl alcohol, n-propyl alcohol, isopropyl alcohol, n-butyl alcohol, sec-butyl alcohol, tert-butyl alcohol and isobutyl alcohol; amides such as dimethyl formamide and dimethyl acetamide; polyalkylene glycol such as polyethylene glycol and polypropylene glycol; polyols such as ethylene glycol, propylene glycol, triethylene glycol, diethylene glycol, dipropylene glycol, thioglycol, 1, 2, 6-hexanetriol, hexylene glycol and glycerol; lower alkyl ethers of polyhydric alcohols such as ethylene glycol monoethyl(butyl) ether, diethylene glycol monoethyl(butyl) ether and triethylene glycol monoethyl(butyl) ether; and dipolar aprotic solvents such as N-methyl-2-pyrolidone, 2-pyrolidone, dimethyl sulfoxide, sulforane and dimethyl formamide. The content of the above water-soluble organic solvent in the ink according to the present invention is preferable in a range of 13 to 50 % by weight relative to the whole weight of ink and the content of water is preferably in the range of 10 to 90 % by weight of the ink.

In addition to the above components, in the ink according to the present invention, a surfactant, an antifoaming agent, antiseptics or the like may be added to obtain ink having a desired physical properties. Further, a commercially available water-soluble dye or the like can be added.

The ink according to the present invention can be prepared as follows. For example, the pigment, of which phosphorus content has been reduced to 500 ppm or less by washing etc. as mentioned above, is mixed with an aqueous solution of a pigment dispersant such as an alkaline-soluble resin solubilized with addition of a given amount of an alkali compound. Then, the mixture is dispersed by using a dispersing apparatus mentioned later to make a dispersion, to which the above water-soluble solvent or water is added, and pH of the ink is controlled by adding a pH controlling agent to pH 7 or higher. If necessary, a water-soluble organic solvent, an antifoaming agent, antiseptics or the like may be added to this dispersion, or the dispersion itself may be used as the ink. Furthermore, if necessary, the classification may be performed by means of a centrifuge.

For the above dispersion treatment, any generally used apparatus can be used, for example, a ball mill, a roll mill and a sand mill. A high-speed sand mill is preferable, including Supermill, Sand grinder, Beads mill, Agitator mill, Grain mill, Taino mill, Pearl mill and Cobol mill (all are trade names).

To obtain desirable particle distribution of the pigment to be used in the present invention, there are methods, for example, to minimize the size of pulverization medium, to increase the charging ratio of the pulverization medium, to prolong the treatment time, to slow down the discharge speed, to classify the pigment particles by using a filter or a centrifuge after pulverization, or a combination of these methods.

〈Recording Apparatus〉

Next, we explain one example of the ink-jet recording apparatus preferable for ink-jet recording with the ink according to the present invention.

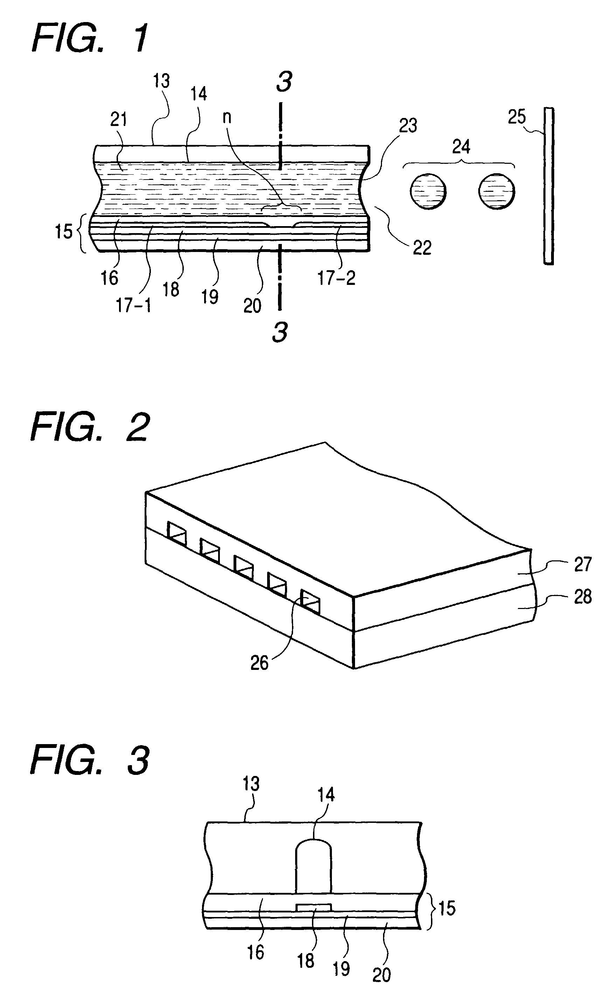

First, an ink-jet recording apparatus which employs thermal energy for ink discharge is explained. Constitution of the recording head, a main part of the recording apparatus, is shown in FIGS. 1, 2 and 3.

The head 13 is formed by attaching glass, ceramic, silicon, or plastic etc. in which at least one ink flow path 14 is provided, to a heat-generating head 15 used in thermosensitive recording ( FIG. 1 shows a filmy head 15 but not limited thereto). The heat-generating head 15 is composed of a protective film 16 made of silicon oxide, silicone nitride, silicon carbide or the like, aluminum electrodes 17-1 and 17-2 made of aluminum, aluminum-copper alloy or the like, a heat-generating resistance layer 18 made of nichrome etc., a heat-accumulating layer 19, and a substrate 20 made of alumina etc. which is excellent in heat radiation.

Recording ink 21 comes to the discharge port 22, forming a meniscus 23 with pressure P.

Upon application of the electric signal to the electrodes 17-1 and 17-2 as a pulse, the heat generating head 15 rapidly generates heat at the region shown by "n" to form a bubble in the ink 21 in contact with this region. The meniscus 23 of the ink is discharged by the pressure of the bubble thus produced, and is discharged from the orifice 22 to a recording medium (for example, paper) 25 in the form of an ink droplet 24 to attach onto the recording medium 25.

FIG. 2 schematically illustrates a recording head having an array of nozzles similar to that is shown in FIG. 1. This head is prepared by bonding a glass plate 27 having a number of flow path 26 to a heat generating head 28 as shown in FIG. 1. Here, FIG. 1 is a schematic cross-sectional view of a head 13 taken along an ink flow path, and FIG. 3 is a cross-sectional view taken along line 3-3 in FIG. 1.

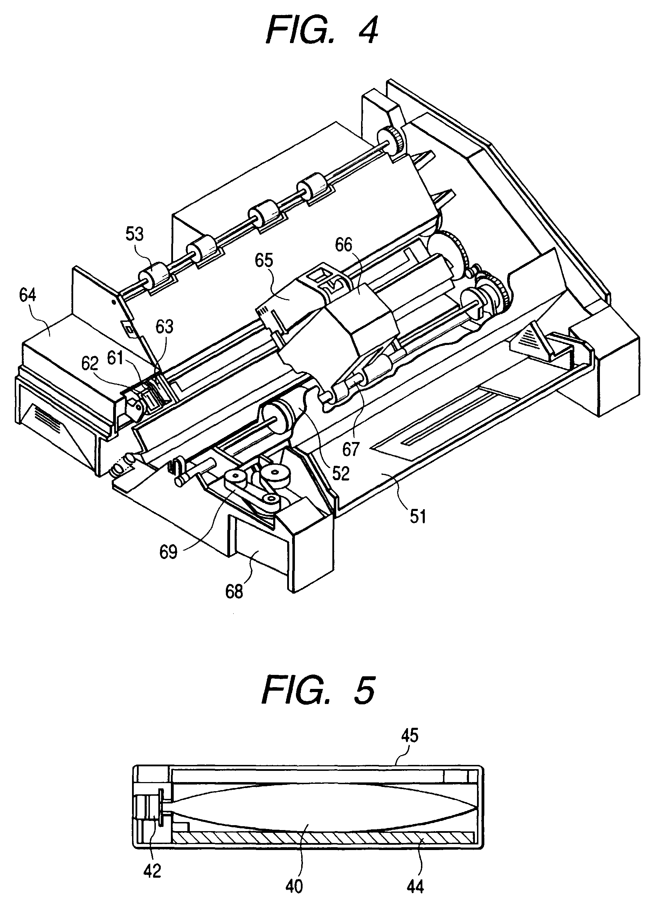

FIG. 4 illustrates an example of an ink-jet recording apparatus in which such a head as described above is incorporated. In FIG. 4, the blade 61 is a wiping member, one end of which is a fixed end held by a blade-holding member to cantilever. The blade 61 is provided at a position adjacent to a region in which a recording head 65 operates, and in this aspect, is held in such a form that it protrudes into the path of the recording head 65.

Reference numeral 62 designates a cap for a discharge port of the recording head 65, and the cap is arranged in a home position adjacent to the blade 61, moves in the direction perpendicular to the moving direction of the recording head 65, and caps the ink-discharge port when touching it. Numeral 63 designates an ink-absorber provided adjacent to the blade 61, which is held in the moving path of the recording head 65 in a projecting form like the blade 61.

The above blade 61, cap 62 and ink-absorber 63 constitute a discharge recovery device 64, and the blade 61 and the ink-absorber 63 serve to remove moisture and dust on the ink-discharge port. Reference numeral 65 designates a recording head. The head contains an energy generating means for ink discharge and performs recording by discharging ink towards a recording medium opposite to the ink-discharge port. Numeral 66 designates a carriage for carrying the recording head 65 to move it. The carriage 66 is engaged with a guide shaft 67 in a slidable manner, and a part of the carriage 66 is connected to a belt 69 (not shown in the figure) driven by a motor 68. Thus the carriage 66 can move along the guide shaft 67, and the recording head 65 can move in the recording region and the region adjacent thereto.

Reference numeral 51 designates a recording medium feeding part for inserting a recording medium and numeral 52 designates a paper-delivery roller driven by a motor not shown in the figure. With such an arrangement, the recording medium is fed to the position opposite to the ink discharge port of the recording head 65 and conveyed to a paper output portion provided with a paper output roller 53 as recording proceeds.

In the above arrangement, while the recording head returns to its home position after recording, the cap 62 of the discharge recovery part 64 recedes from the moving path of the recording head, but the blade 61 is projecting in the moving path. As a result, the ink discharge port of the recording head 65 is wiped. When the cap 62 comes into contact with the discharge port of the recording head 65 to cap it, the cap 62 moves so as to protrude into the path of motion of the recording head 65.

When the recording head 65 is moved from its home position to the position at which recording is started, the cap 62 and the blade 61 are at the same positions as the wiping position as described above. As a result, the discharge port of the recording head 65 is also wiped at the time of this movement. The above movement of the recording head 65 to its home position is made not only when the recording is completed or for discharge recovery, but also when the recording head 65 is moving in the recording region for recording, that is, it moves to the home position adjacent to the recording region at given intervals during recording, so as to wipe the discharge port surface with this movement.

FIG. 5 shows one example of an ink cartridge for storing ink for feeding ink to the recording head through an ink feeding member such as tube. In the drawing, reference numeral 40 denotes a member constituting the ink cartridge 45, an ink storage portion such as ink bag, whose tip is equipped with a rubber stopper 42. The ink in the ink bag 40 can be fed to the recording head by inserting a needle (not shown in the figure) into the stopper 42. Numeral 44 denotes an ink absorber for receiving waste ink. For the ink container, its surface in contact with ink is preferably made of polyolefin, particularly polyethylene.

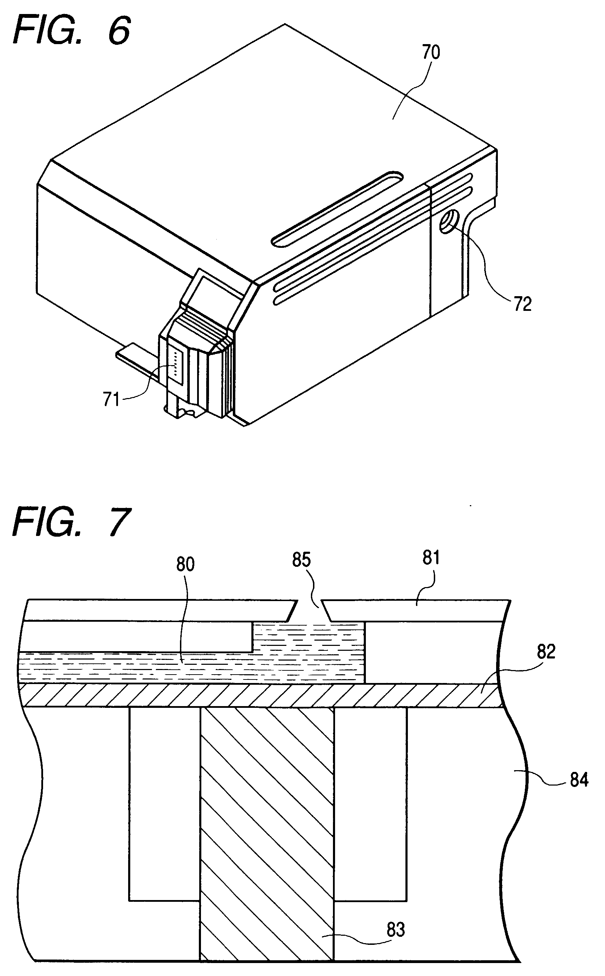

The ink-jet recording apparatus used in the present invention are not limited to the apparatus as described above in which the head and the ink cartridge are separately provided. Therefore, a device in which these members are integrally formed as shown in FIG. 6 can also be preferably used. In FIG. 6, reference numeral 70 designates a recording unit containing an ink container containing an ink, for example, an ink-absorbing member in it. The ink contained in the ink-absorbing member is discharged as an ink droplet from a head 71 having a plurality of orifices.

As a material for the ink-absorbing member, polyurethane may be preferably used. Reference numeral 72 indicates an air passage for communicating the interior of the recording unit 70 with the atmosphere. This recording unit 70 can be used in place of the recording head 65 shown in FIG. 4, and detachably installed on the carriage 66.

Next, as a second form of an ink-jet recording apparatus, we explain an apparatus of an ink-discharging system utilizing dynamic energy for ink discharge, e.g., an ink jet recording apparatus of a piezo system using a piezoelectric element. As such a recording head, there is an on-demand ink-jet recording head which comprises a nozzle substrate having multiple nozzles, piezoelectric material disposed opposite to the nozzles, a pressure-generating element made of a conductive material, and ink filled around the above pressure generating element. It discharges an ink droplet by deformation of the pressure generating element according to the applied voltage. A configuration example of such a recording head is shown in FIG. 7.

The recording head is constituted of: ink flow path 80 leading to the ink chamber (not shown); orifice plate 81 to discharge an ink droplet of the desired volume; and vibration plate 82 which applies a pressure directly to the ink: piezoelectric element 83 which is connected with the vibration plate 82 and deforms by the electric signals; and base plate 84 to hold and fix the piezoelectric element 83, orifice plate 81 and vibration plate 82.

In FIG. 7, the ink flow path 80 is made from a photosensitive resin; the orifice plate 81 is made of a metal such as stainless steel and nickel; the discharge port 1711 is formed by making a hole in the orifice plate 81 by electrocasting or press processing; the vibration plate 82 is made from a metal film such as stainless steel, nickel and titanium and a highly elastic resin film; and the piezoelectric element 83 is made from a dielectric material such as barium titanate and PZT.

The recording head of the above constitution works as follows: when a pulse-like voltage is given to the piezoelectric element 83, a strain stress is generated, of which energy deforms the vibration plate connected with the piezoelectric element 83 to apply pressure vertically to the ink in the ink flow path 80, and an ink droplet (not shown) is discharged from the orifice 85 of the orifice plate 81 to perform recording. Such a recording head is incorporated into the recording apparatus similar to the one shown in FIG. 4. Detailed action of the parts of the recording apparatus may be the same as mentioned above.

Examples

Next, referring to examples, the present invention will be described in further details. Hereinafter, "part(s)" and "%" in the following description is represented by weight, unless otherwise stated.

Preparation Example 1

〈Pigment washing 1〉

The powdered pigment PR 122 (trade name: Hostaperm Pink E, a product of Hoechst) was packed into a column and an aqueous solution of 1N hydrochloric acid and 5% ethanol was made to flow through the column to an amount of about 30 fold in volume of the packed pigment. After that, an aqueous solution of 10% ethanol was passed through the column until the pH of the eluate became neutral. The flow rate was set to 10 ml/min or slower. Thereafter, the pigment was taken out from the column and dried in a thermostat of 100°C.

〈Determination of phosphorus concentration in pigment〉

About 1 g of pigment powder before and after the washing was put in a porcelain crucible and incinerated by heating at 700°C for 2 hr in an electric furnace with a loose lid. After cooling, several drops of concentrated hydrochloric acid were added to dissolve the ash. Thereafter, the solution was diluted with pure water to 10 ml and the phosphorus content was measured by an inductively-coupled plasma spectometer (ICP). The phosphorus content in 1 g of untreated pigment was 1500 ppm, while it was 40 ppm after washing.

〈Preparation of pigment dispersion〉

First, a dispersion agent was prepared.

| | |
|---|---|
| • Acrylic acid-butyl acrylate-methyl methacrylate copolymer (acidic value: 80, average molecular weight: 7,000) | 5 parts |
| • Potassium hydroxide | 0.5 part |
| • Ion exchange water | 70 parts |
| • Diethylene glycol | 5 parts |

The above components were mixed and heated at 70°C on a water bath to dissolve the resin component completely. Then 15 parts of pigment subjected to the above washing treatment and 5 parts of ethanol were added to this solution and premixed for 30 min, and subjected to dispersion treatment under the following conditions.

Dispersion apparatus: Sand grinder (Igarashi Kikai)
Pulverization medium: 1 mm diameter Zirconium Beads
Charging Rate of the medium: 60% by volume
Pulverization time: 3 hr

Furthermore, the dispersion thus prepared was subjected to centrifugation (20000 rpm, 20 min), coarse particles were removed and a pigment dispersion was obtained and used for following ink preparation.

〈Preparation of ink〉

| | |
|---|---|
| • The pigment dispersion | 30 parts |
| • Diethylene glycol | 10 parts |
| • Glycerol | 10 parts |
| • Polyethylene glycol 400 | 5 parts |
| • Isopropyl alcohol | 1 part |
| • Polyoxyethylene alkyl ether | 2 parts |
| • Antiseptics (trade name: Proxel GXL, Zeneca made) | 0.1 part |
| • Antifoaming agent (trade name: Surfinol, Air Products) | 0.1 part |
| • Pure water | approx. 42 parts |

The above components were mixed and stirred for 1 hr to obtain Ink 1 of pH 9.8.

〈Determination of phosphorus concentration in ink〉

The prepared ink was diluted 5-fold with pure water and the phosphorus content was measured by an inductively-coupled plasma spectrometer (ICP). The phosphorus content in the ink was 2 ppm.

Preparation Example 2

〈Pigment washing 2〉

The powdered pigment PR 122 (trade name: Hostaperm Pink E, a product of Hoechst) was put in a beaker and an aqueous solution of 1N hydrochloric acid and 5% ethanol was added and stirred for 60 min using a magnetic stirrer. After standing for a while, the supernatant was discarded and the same amount of the same solution of 1 N sodium hydroxide and 5% ethanol was added. This procedure was repeated 5 times. Next, the washing solution was changed to an aqueous 10% ethanol solution, and the same procedure was repeated until pH of the supernatant became neutral to wash the pigment. After that, the washed pigment was dried in a thermostat of 100°C.

〈Determination of phosphorus concentration in pigment〉

The phosphorus concentration in the pigment was determined in the same manner as in Example 1, to find that it was 1500 ppm and 50 ppm before and after washing respectively.

〈Preparation of pigment dispersion and ink〉

Ink 2 was prepared in the same manner as in Example 1, except that the pigment obtained in pigment washing 2 was used. The phosphorus concentration of Ink 2 was 2 ppm.

Preparation Example 3

〈Pigment washing 3〉

The powdered pigment PR 168 (trade name: Hostaperm Scarlet GO, a product of Hoechst) was packed into a column and an aqueous solution of 1N potassium hydroxide and 5% ethanol was made to flow through the column to an amount of about 30 fold in volume of the packed pigment. After that, an aqueous solution of 10% ethanol was passed through the column until the pH of the eluate became neutral. The flow rate was set to 10 ml/min or slower. Thereafter, the pigment was taken out from the column and dried in a thermostat of 100°C.

Determination of phosphorus concentration in pigment)

The phosphorus concentration in the pigment was determined in the same manner as in Example 1, to find that it was 1200 ppm and 50 ppm before and after washing respectively.

Preparation of pigment dispersion and ink)

Ink 3 was prepared in the same manner as in Example 1, except that the pigment obtained in pigment washing 3 was used. The phosphorus concentration of Ink 2 was 2 ppm.

Preparation Example 4

Pigment washing 4）

The powdered pigment PR 168 (trade name: Hostaperm Scarlet GO, a product of Hoechst) was put in a funnel part of a filtration apparatus under reduced pressure and an aqueous 10% isopropyl alcohol solution was made to flow through the funnel to an amount of about 50 fold in weight of the pigment to wash the pigment. Thereafter, the pigment was taken out from the funnel and dried in a thermostat of 100°C.

Determination of phosphorus concentration in pigment)

The phosphorus concentration in the pigment was determined in the same manner as in Example 1, to find that it was 1500 ppm and 50 ppm before and after washing respectively.

Preparation of pigment dispersion and ink)

Ink 4 was prepared in the same manner as in Example 1, except that the pigment obtained in pigment washing 4 was used. The phosphorus concentration of Ink 4 was 30 ppm.

Preparation Example 5

Pigment washing 5）

The powdered pigment PY 151 (trade name: Hostaperm Yellow H4G, a product of Hoechst) was packed into a column and an aqueous solution of 0.1N hydrochloric acid and 5% ethanol was made to flow through the column to an amount of about 20 fold in volume of the packed pigment. After that, an aqueous solution of 5% ethanol was passed through the column until the pH of the eluate became neutral. The flow rate was set to 10 ml/min or slower. Thereafter, the pigment was taken out from the column and dried in a thermostat of 100°C.

Determination of phosphorus concentration in pigment)

The phosphorus concentration in the pigment was determined in the same manner as in Example 1, to find that it was 900 ppm and 100 ppm before and after washing respectively.

Preparation of pigment dispersion and ink)

Ink 5 was prepared in the same manner as in Example 1, except that the pigment obtained in pigment washing 5 was used. The phosphorus concentration of Ink 2 was 5 ppm.

Preparation Example 6

Pigment washing 6）

The powdered pigment PB 15:3 (trade name: Heriogen Blue, a product of BASF) was put in a large beaker and an aqueous solution of 10% ethanol was added in an amount 20 times as much as the pigment volume and stirred for 60 min using a magnetic stirrer. After that, the content in the beaker was transferred to a centrifuge tube and centrifuged at 2000 rpm for 10 min in a centrifuge (Hitachi, 18PR-52). After the supernatant was removed a 10% ethanol solution was added, and the content was stirred and centrifuged under the same conditions as above, The pigment was taken out and dried in a thermostat at 100°C.

(Determination of phosphorus concentration in pigment)

The phosphorus concentration in the pigment was determined in the same manner as in Example 1, to find that it was 600 ppm and 300 ppm before and after washing respectively.

(Preparation of pigment dispersion and ink)

Ink 6 was prepared in the same manner as in Example 1, except that the pigment obtained in pigment washing 6 was used. The phosphorus concentration of Ink 6 was 14 ppm.

Preparation Example 7

Except that a pigment dispersant of the following composition was used, Ink 7 was prepared in the same manner as in Example 1.

(Composition of Pigment Dispersant)

| | |
|---|---|
| • Polyoxyethylene tridecyl ether phosphate salt (Phosphanol RS410, Toho Chemicals) | 5 parts |
| • Potassium hydroxide | 0.5 part |
| • Ion-exchanged water | 70 parts |
| • Diethylene glycol | 5 parts |

Since an organic phosphorus type dispersant was used, the concentration of inorganic phosphorus in the ink was measured as follows:

(Determination of inorganic phosphorus concentration in ink)

One drop of 50% hydrochloric acid was added to 10 g of pigment ink to aggregate the pigment. After the filtration with a Toyo Filter Paper 5C, the aggregate was washed with pure water till the eluate becomes neutral. The dispersant in the aggregate was extracted by reflux with tetrahydrofuran or chloroform, decantation, and Soxhlet extraction, and then the pigment was dried in a thermostat of 40°C.

The above dried pigment powder was put into a porcelain crucible and incinerated at 700°C for 2 hr in an electric furnace with a loose lid. After the cooling, several drops of concentrated hydrochloric acid were added to dissolve the ash. Thereafter, the solution was diluted with pure water to 10 ml and the content of phosphorus was measured on an inductively-coupled plasma spectrometer (ICP). The concentration of inorganic phosphorus in Ink 7 was 2 ppm.

Comparative Preparation Example 1

Except that unwashed pigment PR122 (trade name: Hostaperm Pink E, Hoechst) was used, Comparative Ink 1 was prepared in the same manner as in Example 1. The phosphorus concentration in Comparative Ink 1 was 68 ppm.

Comparative Preparation Example 2

Except that unwashed pigment PR 168 (trade name: Hostaperm Scarlet GO, Hoechst) was used, Comparative Ink 2 was prepared in the same manner as in Example 1. The phosphorus concentration in Comparative Ink 2 was 54 ppm.

Examples 1 to 7, and Comparative Examples 1 and 2

Evaluation of Inks 1 to 7 and Comparative Inks 1 and 2 was carried out as follows.

(1) Discharge Durability

Printing of a given pattern was carried out with each of the inks prepared in Examples 1 to 7 and Comparative Examples 1 and 2. Each ink was filled in a large bottle and an ink cartridge for Bubble-jet printer BJ-W7000 (Canon) and for Bubble-jet printer BC20 (Canon) respectively, to print 200 sheets. Regarding the discharge durability, the following items were evaluated.

1-1) Measurement of change in discharge amount

The number of pulses and the weight of the discharged ink were compared between the 5th sheet and the 200th sheet to determine the change in discharge amount. Comparative inks could not be discharged before the 200th sheet printing.

A: The change in discharge amount (weight) is ±5% or less and the visual density of the print is almost the same between the 5th and 200th sheets.
B: The change in discharge amount (weight) is between ±5% and ±10%, and the visual difference in the density of print is acceptable between the 5th sheet and the 200th sheet.
C: The change in weight of discharge amount is above ±10% and a difference in the density of printed matters is clearly appreciable between the 5th sheet and the 200th sheet.

1-2) Visual evaluation of kogation on heater

The ink-jet head after printing on 200 sheets (Comparative inks could not be discharged before the 200th sheet printing) was detached and the heater was taken out. The heater surface was washed by dropping pure water by a pipette and observed under optical microscope.

A: No deposit on the heater surface was observed.
B: A small amount of deposit was observed near the center of the heater surface.
C: The heater surface was entirely covered with deposit.

1-3) Analysis of koga on heater

The ink-jet head after the 200 sheets printing (Comparative inks could not be discharged before the 200th sheet printing) was dismantled and the heater was taken out. The phosphorus concentration of the deposit on the heater was measured using an electron probe microanalyzer (EPMA). The analysis conditions were an accelerating voltage of 15 kV and a beam diameter of 20 microns. If the phosphorus concentration is less than 0.5%, the influence of kogation on discharge properties is negligible.

A: The ratio of phosphorus in all elements analyzed by characteristic X-ray (K$\alpha$) is below 0.3%.
B: The ratio of phosphorus in all elements analyzed by X-ray (K$\alpha$) is 0.3% or more to less than 0.5%.
C: The ratio of phosphorus in all elements analyzed by characteristic X-ray (K$\alpha$) is more than 0.5%.

〈Results〉

Table 1 shows the evaluation results.

It is clearly shown that in Examples where the phosphorus concentration in the ink was low, change in the discharge amount was small, the discharge durability was good, and even in Example 4 where the largest amount of koga was formed, only slight residual koga was present on the heater surface after the easily removable carbonic koga was washed out with pure water. On the other hand, in Comparative Examples where the phosphorus concentration in the ink was high, ink discharge became impossible midways, and firmly stuck koga was observed all over the heater surface, which could not be removed by washing with pure water. EPMA analysis of koga on the heater surface before the washing showed that the larger the phosphorus concentration in koga and the ink is, the more the koga not washed out with water is present on the heater. That is to say, when an ink of Preparation Examples was used, there was formed carbonic koga which can be removed or dispersed by the ink cavitation, but not phosphorus-derived koga which affects the ink discharge. On the other hand, when an ink of Comparative Preparation Example was used, a lot of phosphorus-derived koga was formed in addition to carbonic koga, affecting the ink discharge properties.

The mechanism how a small amount of phosphorus in pigment ink stimulates the formation of koga on the heater rapidly decreasing the discharge amount of ink can be explained as follows. When the inorganic phosphorus compound in ink is heated by the heater, it reacts with calcium present in the ink or eluted from the surrounding materials in contact with the ink, such as nozzle or tank, to form compounds that adhere onto the heater. The compound containing phosphorus and calcium, such as calcium phosphate or hydroxy apatite, is very hard and hardly soluble, and it would not be re-dispersed or stripped off. Once such a compound attached onto the heater, koga that would have been stripped off or re-dispersed by the ink cavitation tends to adhere to the heater. Thus, it seems that stacking of carbonic koga that would not occur in the absence of phosphorus-derived koga is accelerated to inhibit bubble formation, thereby rapidly decreasing ink discharge amount.

The precise reason why the accumulation of carbonic koga is stimulated by small koga made of phosphorus and calcium is not known yet, but it is considered that carbonic koga enters into the minute surface roughness on the heater due to the adherence of koga composed of phosphorus and calcium.

(2) Discharge properties of ink cartridge after long-term storage

Next, Inks 1 to 7, which showed good discharge on durability, were evaluated on the discharge properties after long storage.

2-1) Measurement of pigment concentration in ink cartridge

Each ink was filled in an ink cartridge of BC 20 (Canon) and the cartridge was kept for 2 months in a thermostat of 60°C with the nozzle fixed upward. Then, after cooling to room temperature, 0.5 g of ink samples were taken from the upper part of the cartridge (near the nozzle) and the lower part of the cartridge by boring holes in the side kept upward during storage and in the side kept downward during storage respectively. The samples were diluted with pure water 1000-fold for Inks 1 to 5 and 7 and 2000-fold for Ink 6. Thereafter, absorbance was measured by spectrophotometer to determine λmax (absorption of coloring material).

2-2) Measurement of change in discharge amount

Each ink was filled in an ink cartridge of BC 20 (Canon) and the cartridge was kept for 2 months in a thermostat of 60°C with the nozzle fixed upward. Then using this cartridge, printing of a given pattern on 100 sheets was carried out at 360 dpi × 360 dpi, 1 pass and 10 kHz by a bubble-jet printer BJC 5500/BJC 5500J (Canon).

The number of pulses and the weight of the discharged ink were compared between the 5th sheet and the 100th sheet to determine the change in discharged amount.

A: The change in discharged amount (weight) is ±5% or less and the visual density of the print is almost the same between the 5th and 100th sheets.
B: The change in discharged amount (weight) is between ±5% and ±10%, and the visual difference in the density of print is acceptable between the 5th sheet and the 100th sheet.
C: The change in weight of discharged amount is above ±10% and a difference in the density of print is clearly appreciable between the 5th sheet and the 100th sheet.

The results are shown in Table 2.

The measured λmax ascertains that a gradient in the pigment concentration in ink is present after a long-term storage of the ink cartridge, suggesting that there is also a gradient of phosphorus which is considered to be adsorbed onto the porous surface of the pigment. However, discharge amounts were not changed before and after the storage with all Inks except for Ink 4, and even with Ink 4, the difference in image density of the print was inappreciable by the visual evaluation. In brief, it was ascertained that even when an ink cartridge in which partial high concentration of phosphorus is present as a result of a long-term storage is used, kogation that affects the ink discharge or visual evaluation of the formed print would not occur.

According to the present invention, there are provided an ink, an ink production method, an ink-jet recording apparatus capable of stably suppressing kogation, for keeping good discharge properties and high quality image recording, as well as a recording unit and an ink cartridge usable for these, by reducing the inorganic phosphorus concentration in the pigment for the ink to 500 ppm or less.

[Table 1]

| | Inorganic phosphorus concentration in Ink | Discharge durability | | |
| --- | --- | --- | --- | --- |
| | | Change in discharged amount | Visual estimation of koga on heater after washing | Phosphorus concentration in koga on heater before washing |
| Example 1 | 2 ppm | A | A | A |
| Example 2 | 2 ppm | A | A | A |
| Example 3 | 2 ppm | A | A | A |
| Example 4 | 30 ppm | B | B | B |
| Example 5 | 5 ppm | A | A | A |
| Example 6 | 14 ppm | A | A | A |
| Example 7 | 2 ppm | A | A | A |
| Comp. Example 1 | 68 ppm | C<br><br>No Discharge during Printing | C | C |
| Comp. Example 2 | 54 ppm | C<br><br>No Discharge during Printing | C | C |

[Table 2]

| | Inorganic phosphorus concentration in Ink | Discharge property after long-term storage | |
| --- | --- | --- | --- |
| | | λmax (*1) | Change in discharged amount |
| Example 1 | 2 ppm | 0.91 | A |
| | | 1.12 | |
| Example 2 | 2 ppm | 0.89 | A |
| | | 1.09 | |
| Example 3 | 2 ppm | 0.88 | A |
| | | 1.05 | |
| Example 4 | 30 ppm | 0.91 | B |
| | | 1.21 | |
| Example 5 | 5 ppm | 0.79 | A |
| | | 1.5 | |
| Example 6 | 14 ppm | 0.79 | A |
| | | 1.09 | |
| Example 7 | 2 ppm | 0.82 | A |
| | | 1.1 | |

(*1)
Upper Row: Ink taken from the side near the nozzle.
Lower Row: Ink taken from the side near the bottom.

**Claims**

1. An ink comprising a liquid medium and a pigment dispersed therein, wherein the pigment contains phosphorus in a concentration of 500 ppm or lower as an inorganic compound, and the liquid medium is water or a mixture of water and a water-soluble organic solvent.

2. The ink according to claim 1, wherein the concentration of phosphorus as an inorganic compound in the ink is 30 ppm or lower.

3. The ink according to claim 1 or 2, further comprising at least one pigment dispersant selected from the group consisting of alkali-soluble resins and surfactants.

4. The ink according to any one of claims 1 to 4, wherein the ink is an ink for ink-jet recording.

5. The ink according to claim 4, wherein the ink for ink-jet recording is an ink for bubble-jet recording.

6. An ink for ejecting by the bubble-jet process, comprising a pigment containing phosphorus in a concentration of 500 ppm or lower as an inorganic compound, in a state of being dispersed in an aqueous medium, thereby stably reducing the adherence of koga to a heater of a bubble jet head.

7. A method for producing an ink, comprising the steps of:

   (i) selecting a pigment containing phosphorus in a concentration of 500 ppm or lower as an inorganic compound; and
   (ii) dispersing the pigment selected in step (i) in an aqueous medium.

8. A method for producing an ink, comprising the steps of:

(i) washing a pigment containing phosphorus in a concentration of 500 ppm or higher as an inorganic compound to lead the concentration to 500 ppm or lower; and
(ii) dispersing the pigment obtained in the step (i) in an aqueous medium.

9. The method for producing an ink according to claim 7 or 8, wherein the ink is an ink for ink-jet recording.

10. An ink-jet recording method comprising:

a step of discharging an ink for ink-jet recording according to claim 4 from the orifice of a recording head in response to a recording signal.

11. The ink-jet recording method according to claim 10, wherein the ink is discharged by an action of a mechanical energy on the ink.

12. An ink-jet recording method comprising:

a step of discharging an ink according to claim 5 or 6 from an orifice of a recording head in response to a recording signal by an action of thermal energy on the ink.

13. An ink-jet recording unit comprising:

an ink container containing an ink for ink-jet recording according to claim 4; and
a head section for discharging the ink.

14. The ink-jet recording unit according to claim 13, wherein the head section is a head for discharging the ink by an action of a thermal energy on the ink.

15. The ink-jet recording unit according to claim 13, wherein the head section is a head for discharging the ink by an action of a mechanical energy on the ink.

16. The ink-jet recording unit according to any one of claims 13 to 15, wherein an ink absorber in the ink containing is formed of a polyurethane, a cellulose, a polyvinyl acetate or a polyolefin resin.

17. An ink cartridge comprising an ink container containing an ink according to any one of claims 1 to 5.

18. The ink cartridge according to claim 17, wherein the ink container has a liquid contact face formed of polyolefin.

19. An ink-jet recording apparatus comprising:

an ink container containing an ink for ink-jet recording according to any one of claims 1 to 5; and
a head section for discharging the ink.

20. The ink-jet recording apparatus according to claim 19, wherein the head section is a head for discharging the ink by an action of a thermal energy on the ink.

21. The ink-jet recording apparatus according to claim 19, wherein the head section is a head for discharging the ink by an action of a mechanical energy on the ink.

22. The ink-jet recording apparatus according to any one of claims 19 to 21, wherein an ink absorber in the ink container is formed of a polyurethane, a cellulose, a polyvinyl acetate or a polyolefin resin.

# FIG. 1

# FIG. 2

# FIG. 3

## FIG. 4

## FIG. 5

## FIG. 6

70

72

71

## FIG. 7

80    85    81

82

84

83